# EUROPÄISCHE PATENTSCHRIFT

(11) **EP 3 390 873 B1**
(45) Veröffentlichungstag und Bekanntmachung des Hinweises auf die Patenterteilung: **01.01.2020**
(21) Anmeldenummer: 16810265.5
(22) Anmeldetag: 23.11.2016
(51) Int. Cl.: F16K 11/048, F16K 27/02, F16K 31/42, B60T 8/36, B60T 15/02

(54) **ELEKTROMAGNETISCHE VENTILVORRICHTUNG UND VERWENDUNG EINER SOLCHEN**
ELECTROMAGNETIC VALVE DEVICE AND USE THEREOF
DISPOSITIF FORMANT SOUPAPE ÉLECTROMAGNÉTIQUE ET UTILISATION DE CELUI-CI

(30) Priorität: 16.12.2015 DE 202015106864 U
(43) Veröffentlichungstag der Anmeldung: 24.10.2018
(60) Teilanmeldung: 19207198.3
(73) Patentinhaber: Eto Magnetic GmbH, 78333 Stockach (DE)
(72) Erfinder: KNIPPER, Karsten, 78337 Öhningen-Wangen (DE); BRUCZUK, Witold, 51-523 Wroclaw (PL); BUNIO, Mariusz, 55-040 Zerniki Male (PL)
(74) Vertreter: Patentanwälte Behrmann Wagner PartG mbB
(86) Internationale Anmeldenummer: PCT/EP2016/078513
(87) Internationale Veröffentlichungsnummer: WO 2017/102270

(56) Entgegenhaltungen:
- EP-A1- 0 162 286
- US-A- 3 757 818
- US-A1- 2003 193 149

## Beschreibung

Die vorliegende Erfindung betrifft eine elektromagnetische Ventilvorrichtung nach dem Oberbegriff des Hauptanspruchs. Ferner betrifft die vorliegende Erfindung ein System aufweisend eine Mehrzahl derartiger elektromagnetischer Ventilvorrichtungen, und die vorliegende Erfindung betrifft eine Verwendung einer derartigen elektromagnetischen Ventilvorrichtung.

Elektromagnetische Ventilvorrichtungen nach dem Oberbegriff des Hauptanspruchs sind aus dem Stand der Technik allgemein bekannt und werden etwa für verschiedenste Schalt- bzw. Regelzwecke insbesondere in einer Ausgestaltung als Pneumatikventil im Kraftfahrzeugkontext, und dort insbesondere im Nutzfahrzeugkontext, eingesetzt. Im Rahmen einer üblichen Ausgestaltung etwa als 3/2-Pneumatik-Ventil mit drei Fluid-(Pneumatik-)Anschlüssen und zwei Schaltstellungen bewirken dabei die Ankermittel, in ansonsten bekannter Weise bewegbar als Reaktion auf eine Bestromung stationärer Spulenmittel im Ventilgehäuse, das Schalten, wobei im vorliegenden konkreteren Kontext sogenannter Boosterunterstützter Ventile eine zusätzliche mechanische Verstärkungsfunktionalität der Fluidschaltung realisiert ist. Konkret bewirkt, wiederum in gattungsgemäßer Weise, die gesteuerte Bewegung der Ankermittel das Öffnen bzw. Verschließen eines dem Fluideingangsanschluss (Druckanschluss) des Ventilgehäuses zugeordneten ersten Ventilsitzes. Der geöffnete erste Ventilsitz lässt das einströmende Pneumatikfluid in einen ersten Fluidströmungspfad eintreten, von wo aus das Fluid zum Betätigen von Stößelmitteln (als wesentliche Baugruppe der Booster-Technologie) wirkt. Dabei überwindet der Fluiddruck des in den Eingangsanschluss einströmenden Fluids eine (etwa durch eine Vorspannfeder od.dgl. Kraftspeichermittel erzeugte) Gegenkraft der Stößelmittel und bewegt diese, bis ein zweiter (bislang durch die Stößelmittel verschlossener) Ventilsitz geöffnet wird. Dies ermöglicht dann den Fluidfluss bis zum Fluidausgangsanschluss.

Insbesondere vor dem Hintergrund einer größeren realisierbaren (Fluid)Querschnittsweite hat sich eine derartige Booster-Technologie zur mechanischen Kraftunterstützung von elektromagnetisch betätigten Ventilen durchgesetzt und bewährt.

Allerdings erfordern etwa die hierfür eingesetzten, zum Zusammenwirken mit dem zweiten Ventilsitz ausgebildeten Stößelmittel zusätzlichen axialen Bauraum im Ventilgehäuse (wobei als "axial" im Rahmen des vorliegenden Anmeldungskontexts eine Bewegungsrichtung der Ankermittel, insoweit und bevorzugt entsprechend einer Erstreckungs- bzw. Längsachse des Ventilgehäuse, verstanden werden soll), insbesondere als die Stößelmittel als wesentliche Booster-Baugruppe axial die Ankermittel im Ventilgehäuse fortsetzen. Aufgrund beengter Einbaubedingungen etwa im Kraftfahrzeugkontext besteht hier Optimierungs- bzw. Verkürzungsbedarf, nicht zuletzt als ein gattungsbildendes Ventilgehäuse, neben dem (üblicherweise flanschartig vom Gehäusemantel vorspringenden) Fluideingangs- und Fluidarbeitsanschluss zusätzlich Befestigungsmittel aufweist, welche mindestens einen Durchbruch, typischerweise jedoch ein sich quer zur axialen Richtung erstreckendes Bohrungspaar für zu Montagezwecken einzusetzende Schrauben od.dgl., aufweist. Zusammen mit dem zur Aufnahme der Spulenmittel (samt extern am Gehäuse ansitzendem Steckerabschnitt) benötigtem Bauraum entsteht so eine Axialerstreckung, die optimierungsbedürftig ist.

Bei gattungsbildenden und damit als allgemein aus dem Stand der Technik bekannt vorauszusetzenden Ventilvorrichtungen ist es bekannt, nicht zuletzt zur axialen Dimensionsoptimierung eines bekannten Ventilgehäuses, die Stößelmittel geometrisch im axialen Bereich der Befestigungsmittel vorzusehen, wobei es insbesondere bekannt ist, bei der Ausgestaltung der Befestigungsmittel als Paar zueinander paralleler Befestigungsbohrungen zwischen diesen im Gehäuse die Stößelmittel aufzunehmen. Während diese Maßnahme unter Gesichtspunkten einer optimierten Axialerstreckung des Ventilgehäuses günstig ist, werden gleichwohl auch technische Nachteile bewirkt: Einerseits begrenzt die (üblicherweise auf genormten Durchbrüchen bzw. auf genormten Abständen zwischen den Bohrungen basierende) Geometrie der Befestigungsmittel eine wirksame Quererstreckung der Stößelmittel, insoweit damit auch eine für die für die Booster-Wirkung nutzbare Angriffsfläche des Fluids. Zum anderen bedingt eine derartige Lösung, dass - wiederum entlang der axialen Erstreckungsrichtung des Ventilgehäuses - der Fluideingangsanschluss und der Fluidarbeitsanschluss auf einander gegenüberliegenden Seiten der Befestigungsmittel (also üblicherweise des Paares von Befestigungsbohrungen) angeordnet sein müssen, was wiederum eine nachteilige Wirkung für eine axiale Gesamterstreckung der Vorrichtung mit sich bringt.

Ferner sind aus dem Stand der Technik auch die US 3 757 818 A sowie die US 2003/193149 A1 bekannt.

Aufgabe der vorliegenden Erfindung ist es daher, eine elektromagnetische Ventilvorrichtung nach dem Oberbegriff des Hauptanspruchs im Hinblick auf ihre geometrischen sowie ihre Funktionseigenschaften zu verbessern, dabei insbesondere eine optimierte (und damit in der Praxis möglichst breite) Erstreckung der Stößelmittel im Ventilgehäuse zu ermöglichen, damit die mechanische Unterstützungswirkung dieser Booster-Technologie zu optimieren, ohne in nachteiliger Weise die axiale Gesamterstreckung des Ventilgehäuses unnötig zu verlängern. Die Aufgabe wird durch die elektromagnetische Ventilvorrichtung mit den Merkmalen des Hauptanspruchs gelöst; vorteilhafte Weiterbildungen der Erfindung sind in den Unteransprüchen beschrieben. Zusätzlich Schutz im Rahmen der Erfindung wird beansprucht für eine Verwendung der erfindungsgemäßen elektromagnetischen Ventilvorrichtung als 3/2-Pneumatikventil für Schalt- bzw. Steueranwendungen im Kraftfahrzeugbereich, wobei dort insbesondere das Gebiet der Nutzfahrzeuge günstig und bevorzugt ist. Schließlich wird Schutz im Rahmen der vorliegenden Erfindung beansprucht für ein Ventilsystem, aufweisend eine Mehrzahl erfindungsgemäßer Ventilvorrichtungen, welche mittels der jeweils die Befestigungsmittel realisierenden Durchbrüche miteinander (aneinander) verbunden sind und so eine kompakte, flexible und leicht montierbare und betriebssichere Einheit ausbilden können.

In erfindungsgemäß vorteilhafter Weise ist vorgesehen, dass durch die Ausgestaltung des Ventilgehäuses, der Stößelmittel, des ersten Fluidströmungspfades zu den Stößelmitteln und der Fluidverbindung zum Fluidarbeitsanschluss erfindungsgemäß erreicht wird, dass, bezogen auf die Befestigungsmittel, sowohl der Fluideingangsanschluss, als auch der Fluidarbeitsanschluss, auf einer gemeinsamen (axialen) Seite sitzen. Dies bedeutet zunächst, dass - günstig für eine optimierte axiale Erstreckung der Gesamtanordnung im Ventilgehäuse - die Möglichkeit gegeben ist, Fluideingangsanschluss und Fluidarbeitsanschluss zueinander benachbart anzuordnen, weiter bevorzugt diese - geometrisch günstig und potentiell platzsparend - radial und/oder axial zueinander versetzt anzuordnen. Gleichzeitig gestattet es damit diese Geometrie, die Stößelmittel im Gehäuseinneren axial im Bereich des Fluideingangs- und Fluidarbeitsanschlusses bewegbar vorzusehen, mit der vorteilhaften Konsequenz, dass eine maximale bzw. nutzbare Stößelbreite lediglich durch einen effektiven Gehäuseinnendurchmesser bzw. darin vorgesehene Verbindungskanäle begrenzt ist, nicht jedoch, wie im als bekannt vorausgesetzten Stand der Technik, durch die wesentlich schmalere, durch genormte Befestigungsbedingungen und damit vorgesehene feste Bohrungsabstände bestimmte Geometrie der Befestigungsmittel. Vorteilhafte Konsequenz ist wiederum ein optimiertes (und durch die Booster-Technologie verstärktes) Schaltverhalten der Vorrichtung.

Im Rahmen dieser erfindungsgemäßen Vorgaben gestatten es gleichwohl verschiedene bevorzugte Varianten der Erfindung, das Ventilgehäuse mit den daran ausgebildeten Befestigungsmitteln sowie den Fluidanschlüssen an verschiedene Erfordernisse und Bauraumbedingungen anzupassen, so dass durch die vorliegende Technologie, insbesondere bei bevorzugter modularer Aufteilung des Ventilgehäuses in eine erste, zur Aufnahme der Spulenmittel sowie einem zugeordneten, zur externen Kontaktierung vorgesehenen Steckerbereich ausgebildeten Gehäusebaugruppe und eine zweite, axial daran ansetzbare und zum Ausbilden der Fluidanschlüsse sowie der Befestigungsmittel ausgebildete Ventilgehäusebaugruppe, einfach herstellbare, großserientaugliche und hochgradig betriebssichere Ventilvorrichtungen für verschiedenste Umgebungen konzipier- und konfigurierbar sind.

So bieten insbesondere die flanschartigen, seitlich von einer Mantelfläche des bevorzugt zumindest abschnittsweise zylindrischen Gehäuses vorstehenden (und einstückig ansitzenden) Fluidanschlüsse, nämlich der Fluideingangs- und der Fluidarbeitsanschluss, die Möglichkeit zur Anpassung an verschiedene Einsatzbedingungen bzw. zur weiteren Bauraumoptimierung: so ist es etwa bevorzugt, diese Fluidanschlüsse entlang der radialen Richtung zueinander zu versetzen, wobei dieser radiale Versatz, also ein zwischen den Anschlüssen in einer Ebene senkrecht zur axialen Richtung eingeschlossener Winkel oder Abstand, entweder vorsehen kann, dass der Fluideingangs- und der Fluidarbeitsanschluss einander, bezogen auf die Gehäuse-Mittelachse, gegenüberstehen. Alternativ kann weiterbildungsgemäß vorgesehen sein, dass in der radialen Ebene beide Anschlüsse, zueinander benachbart, lediglich um einen minimalen Abstand beabstandet sind bzw. sich in der radialen Ebene gar überlappen.

In dieser Situation würde dann ein Versatz entlang der axialen Richtung einen möglichst kompakten Anschlussbereich dieser beiden Anschlüsse ermöglichen, die insoweit dann, bezogen auf einer äußere Mantelfläche des Ventilgehäuses, schräg angeordnet sind.

Insbesondere die Anordnung bzw. Ausrichtung der Fluidanschlüsse relativ zu dem mindestens einen Durchbruch, bevorzugt ein zueinander parallel verlaufendes Bohrungspaar, aufweisenden Befestigungsmitteln bietet zusätzliche geometrische Gestaltungs- und Weiterbildungsmöglichkeiten. So ist es etwa gemäß einer bevorzugten Ausführungsform der Erfindung günstig, eine Winkelposition des Fluideingangs- und/oder des Fluidarbeitsanschlusses in der Ebene senkrecht zur axialen Richtung, also in der radialen Ebene, rechtwinklig zur Winkelausrichtung des Durchbruchs vorzusehen, wobei durch diese Maßnahme dann insbesondere ein Anschluss bzw. Zugang zu den Fluidanschlüsse vereinfacht ist, wenn, etwa im Rahmen des erfindungsgemäßen Systems, eine Mehrzahl der erfindungsgemäßen Ventilgehäuse mittels der Befestigungsmittel und entlang der aneinander stoßenden und eine Montage-Erstreckungsrichtung definierenden Richtung der Durchbrüche verbunden ist. Dieser Effekt ist auch erreichbar, wenn der Winkelversatz nicht exakt 90° beträgt, sondern in einem typischen Bereich zwischen 70° und 110° bevorzugt realisiert ist.

Eine vergleichbare Optimierungsmöglichkeit ergibt die relative geometrische Ausrichtung des Durchbruchs und/oder mindestens eines der Fluidanschlüsse relativ zu einer seitlichen Erstreckung eines vom Ventilgehäuse radial vorspringenden (und wiederum bevorzugt einstückig an diesem ansitzenden) Steckerabschnitt, welcher, wiederum in bevorzugter Weiterbildung, an einem axial den Befestigungsmitteln gegenüberliegenden Endabschnitt des Ventilgehäuses vorsehbar ist. Zur Vereinfachung bzw. Vereinheitlichung der elektrischen und pneumatischen Anschlüsse könnte es entsprechend bevorzugt sein, in der radialen Ebene, d.h. in der Ebene senkrecht zur axialen Richtung, diesen Steckerabschnitt sowie mindestens einen der Fluidanschlüsse fluchtend bzw. ohne dazwischen eingeschlossenen (Winkel-)Versatz auszubilden.

Eine besonders bevorzugte Weiterbildung der Erfindung, welche wiederum unter den vorstehend bereits diskutierten Systemgedanken der Erfindung fällt, jedoch auch unabhängig von diesem beansprucht ist und Vorteile verspricht, liegt darin, im Ventilgehäuse einen zusätzlichen Fluidanschluss vorzusehen, welcher zum Fluideingangsanschluss durchgeschleift und damit permanent nicht durch ein Schaltverhalten der Ventilvorrichtung beeinflusst, mit dem Fluideingangsanschluss verbunden ist. Wird dieser zusätzliche Fluidanschluss erfindungsgemäß vorteilhaft und weiterbildend im Bereich der Befestigungsmittel ausgebildet und weiter bevorzugt in einer sich parallel zu einer Erstreckungsrichtung des mindestens einen Durchbruchs der Befestigungsmittel erstreckend ausgebildet, entsteht so die vorteilhafte Möglichkeit, bei einem Aneinanderfügen einer Mehrzahl von Ventilgehäusen (und entsprechend damit ausgebildeten erfindungsgemäßen Ventilvorrichtungen) im Sinne des erfindungsgemäßen Systems nicht nur mittels der dann durchgängig aufeinander ausrichtbaren Durchbrüche eine durchgehende mechanische Kopplung bzw. Verbindung herzustellen, vielmehr würden in dieser Ausbildung dann auch die gleichermaßen durchgehenden (also das Ventilgehäuse querenden) zusätzlichen Fluideingangsanschlüsse zueinander fluchten und eine unmittelbare (Fluid-)Verbindung mit einem jeweils benachbarten Fluidanschluss ermöglichen. Zum Zweck einer Abdichtung bzw. einer druckdichten Ausbildung könnten hier zusätzliche, geeignete anzupassende Kupplungsmittel oder dergleichen vorgesehen werden, entweder als integrierte Abschnitte an bzw. in das Gehäuse, oder aber als zusätzliche, im Bedarfsfall einzusetzende Baugruppen.

Besonders elegant wird eine derartige Weiterbildung dadurch, dass bei einer bevorzugten Ausbildung der Befestigungsmittel mittels eines Paares von Durchbrüchen, welche dann gleichermaßen ein Paar von Verbindungs- und Befestigungsbohrungen, zueinander parallel verlaufend, realisieren würden, dann dieser zusätzliche Fluidanschluss mittig zwischen dem Paar der Durchbrüche vorzusehen wäre, so dass eine gleichermaßen kompakte, einfach ausrichtbare und einfach montierbare Vorrichtung entsteht.

Erfindungsgemäß ist es vorgesehen, dass in konstruktiv und herstellungstechnisch besonders günstiger Weise ein Belüftungspfad zum Belüften eines zwischen den Ankermitteln und einem (bevorzugt axial endseitig im Ventilgehäuse vorgesehenen) Kern (Kernmittel) ausgebildeten Arbeitsraum geschaffen wird. Konkret würde diese Belüftung, welche gemäß häufig existierender Vorgaben an erfindungsgemäße (und gattungsgemäße) Ventilvorrichtungen eine Entlüftung zum Befestigungsmittel-seitigen axialen Ende des Ventilgehäuses fordert, dadurch realisiert werden, dass ein notwendiger Belüftungskanal in mehrere Pfade aufgeteilt wird, und wobei dann in konstruktiv und herstellungstechnischer besonders eleganter Weise eine Verbindung dieser Pfade durch eine Deckel- oder Kappenbaugruppe erfolgt, ohne die Notwendigkeit aufwendiger radial verlaufender Querkanäle oder dergleichen Ausbildungen im Ventilgehäuse. Konkret sieht diese Lösung vor, einen ersten Belüftungspfad in oder (z.B. mantelseitig) an den Kernmitteln auszugestalten, so dass ein Fluidfluss parallel zur axialen Richtung ermöglicht ist. Ein zweiter Belüftungspfad würde dann, wiederum zumindest abschnittsweise parallel zur axialen Richtung am oder im Ventilgehäuse vorgesehen, wobei dies insbesondere auch durch einen etwa im Mantelbereich eingeformten Kanal geschehen kann. Die konstruktiv besonders elegante Ausgestaltung eines Deckel- bzw. Kappenabschnitts als separate Baugruppe ermöglicht nunmehr im end- bzw. stirnseitigen Bereich des Ventilgehäuses (d.h. endseitig des Kerns) das Verbinden dieser beiden Belüftungspfade, ohne dass etwa eine problematische radiale Einformung im Gehäuse selbst geschehen muss. Diese Rolle konnte vielmehr eine Nut oder dergleichen Einkerbung realisieren, welche entweder in der Kappe bzw. dem Deckel, ergänzen oder alternativ im (dann offenen) Endbereich des Ventilgehäuses vorsehbar ist.

Eine so realisierte elektromagnetische Ventilvorrichtung eignet sich dann in bevorzugter Weise für vielfältige, insbesondere pneumatische Schalt- und Stellaufgaben im Kraftfahrzeugbereich, wobei hier wiederum die Nutzfahrzeugtechnologie bevorzugte Einsatzgebiete definiert, die Erfindung ist jedoch nicht auf eine derartige bevorzugte Verwendung beschränkt. Vielmehr eignet sich die vorliegende Erfindung für praktische jegliches Einsatzgebiet, bei welchem, unter potentiell begrenzten geometrischen Einbaubedingungen, Abmessungen, eine Fluid-Anschlussgeometrie sowie eine Befestigungsgeometrie des Ventilgehäuses zu optimieren sind.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Fig. 1, Fig. 2: Perspektivansichten der elektromagnetischen Ventilvorrichtung gemäß einer ersten bevorzugten Ausführungsform der vorliegenden Erfindung;
- Fig. 3: eine Längsschnittansicht des Ausführungsbeispiels der Fig. 1, Fig. 2 mit gestuft verlaufender Schnittlinie;
- Fig. 4: eine Längsschnittansicht analog Fig. 3, jedoch um die (in der Figurenebene senkrecht verlaufende) axiale Richtung um 90° gedreht; und
- Fig. 5, Fig. 6: zwei alternative Ausführungsformen der Erfindung als Alternativen zum ersten Ausführungsbeispiel der Fig. 1 bis 4 mit modifizierter Anordnungsgeometrie des Fluideingangsanschlusses sowie des Fluidarbeitsanschlusses.

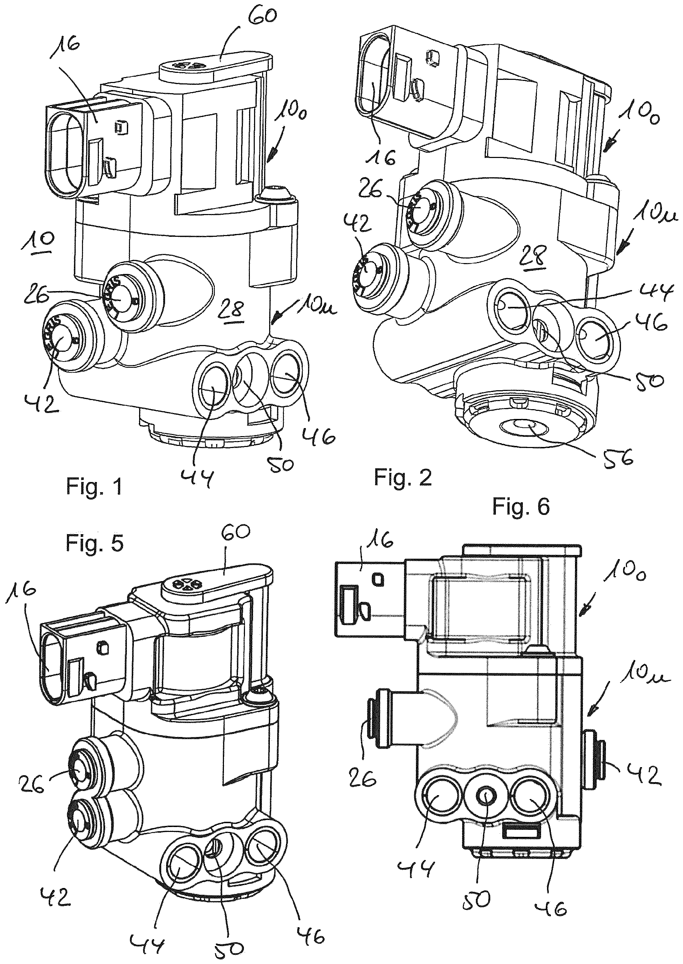

Die Fig. 1 bis 4 zeigen verschiedene Ansichten der erfindungsgemäßen elektromagnetischen Ventilvorrichtung gemäß einer ersten Ausführungsform der vorliegenden Erfindung. Ein Ventilgehäuse 10 bestehend aus einer (in der Figurenebene oberen) Gehäusebaugruppe 10o zur Aufnahme einer stationären Spuleneinheit 12, welche auf einem Spulenträger 14 gehalten und über einen am Gehäuse einstückig ansitzenden Steckerabschnitt 16 elektrisch kontaktierbar ist, und einer unteren Gehäusebaugruppe 10u, ist zur Aufnahme und zum Führen einer in der Figurenebene vertikal und damit in einer axialen Richtung bewegbaren Ankereinheit 18 ausgebildet. Konkret und in ansonsten bekannter Weise erfolgt der Antrieb der Ankereinheit 18, welche durch Wirkung einer Druckfeder 20 gegen einen ersten Ventilsitz 22, diesen stromlos schließend, vorgespannt ist, durch Bestromung der Spule 12 mittels im Steckerabschnitt 16 schematisch gezeigter Kontakte. In ansonsten bekannter Weise führt diese Bestromung zu einer Aufwärtsbewegung des Ankers 18 gegen eine stationäre Kerneinheit 24, wodurch der düsenartige erste Ventilsitz 22 freigelegt wird. Dieser ist mit einem (typischerweise mit Pneumatikfluid eines Drucks im Bereich zwischen ca. 10 und ca. 15bar beaufschlagbaren) Fluideinlass 26 verbunden, welcher flanschartig seitlich vom zylindrischen Mantelabschnitt 28 der unteren Ventilgehäusebaugruppe 10u vorspringt.

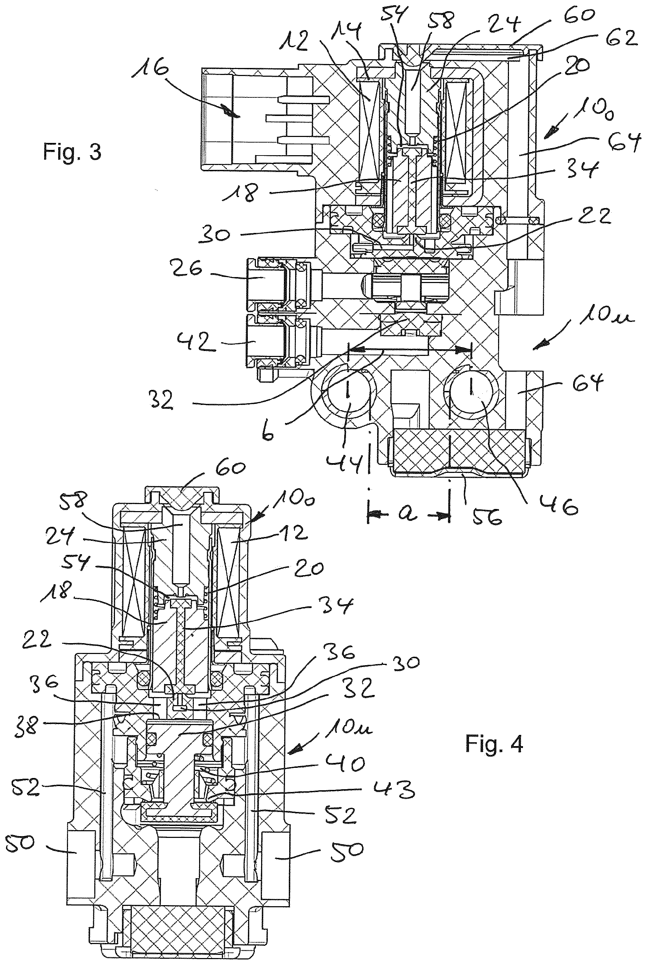

Die Fig. 3 zeigt in Form eines Stichkanals 30 einen Teil dieser Fluidverbindung zwischen dem Fluideinlass 26 und dem düsenseitigen, axial aufwärts gerichteten Auslass des Ventilsitzes 22.

Das in den Fig. 1 bis 4 gezeigte Elektromagnetventil des ersten Ausführungsbeispieles ist mit einer sogenannten Booster-Verstärkungstechnologie versehen, welche primär durch eine axial verstellbare Stößeleinheit 32 realisiert wird, und welche durch Wirkung des Schaltvorgangs des Ankers 18 mit Pneumatikfluid des Fluideinlasses 26 beaufschlagbar ist. So kann bei angezogenem Anker 18 (d.h. bei bestromter Spule 12) und entsprechend freigelegtem Ventilsitz 22 - die Schnittansichten der Fig. 3 und 4 zeigen im Ankerkörper 18 einen mittig eingelegten, axial beidends wirkenden Dichtabschnitt 34 aus polymerem Material - durch den Einlass 26 eintretendes und durch den Stichkanal 30 geführtes Fluid über den geöffneten Ventilsitz 22 und einen benachbarten Kanalabschnitt 36 auf eine in der Figurenebene aufwärts gerichtete Querfläche 38 der Stößeleinheit 32 wirken. Diese ist, wie insbesondere die Schnittansicht der Fig. 4 verdeutlicht, durch eine Druckfeder 40 in einer Aufwärtsrichtung in die Position der Fig. 4 vorgespannt, der einströmende und an 38 anstehende Fluiddruck übersteigt jedoch die Gegenkraft der Druckfeder 40, so dass durch Wirkung des Pneumatikfluids (immer noch bei angezogenem, d.h. aufwärts am Kern 24 anschlagenden Anker 18) der Stößel 32 in den Figurenebenen abwärts bewegt wird. Dies legt einen vom Kanalabschnitt 36 zu einem Fluidarbeitsanschluss 42 über einen zweiten - durch die Stöpsel-Abwärtsbewegung geöffnete Ventilsitz 43 geführten Fluidströmungskanal frei, so dass in diesem Betriebszustand das Pneumatikfluid zum Arbeitsauslass 42, dem Einlass 26 am Gehäusemantel 28 benachbart, fließen kann.

Aus der Geometriebetrachtung des in den Fig. 1 bis 4 erkennbaren Ventilgehäuses 10 wird deutlich, dass das Fluidanschlusspaar 26, 42, bezogen auf die axiale Richtung (d.h. die vertikale Achse in den Figurenebenen) nicht nur einander benachbart und in axialer Richtung versetzt vorgesehen ist, auch liegen die Anschlüsse 26, 42 in einer radialen Ebene (senkrecht zur axialen Richtung) benachbart nebeneinander. Deutlich wird zusätzlich, dass das Fluidanschlusspaar 26, 42, bezogen auf ein Paar von sich senkrecht zur axialen Richtung durch die untere Gehäusebaugruppe 10u erstreckenden Befestigungsbohrungen 44, 46, welche zueinander parallel geführt sind, auf einer axialen Seite befindet, d.h. in der Darstellung der Figurenebene, jeweils oberhalb dieses Paares von Bohrungen 44, 46. Bezogen zudem auf die Erstreckungsrichtung der Bohrungen 44, 46 verläuft die aus dem Gehäuse 10 herausgeführte Richtung des Paares der Fluidanschlüsse 26, 42 orthogonal, d.h. in einem 90°-Winkel. Erfindungsgemäß vorteilhaft und weiterbildend nimmt zudem die einstückig und aus einem Kunststoffmaterial realisierte untere Gehäusebaugruppe 10u sowohl die Befestigungsbohrungen 44, 46, als auch das Fluidanschlusspaar 26, 42, auf bzw. realisiert diese, so dass, bei geeignet dann einzusetzender Booster-Baugruppe und anschließendem Zusammenfügen mit der (die Magnetventiltechnologie vormontiert aufweisenden) oberen Gehäusebaugruppe 10o ein effizienter, potentiell großserientauglicher Weg zur Fertigung der Gesamtanordnung geschaffen ist.

Auch lassen insbesondere die Schnittansichten gemäß Fig. 3, Fig. 4 die durch die Erfindung erreichten geometrischen Bauraumvorteile im Hinblick auf ein erreichbares Querschnitt- bzw. Flächenmaß insbesondere der Stößeleinheit 32 erkennen: durch die vorliegende Erfindung wird nämlich insbesondere vorteilhaft erreicht, dass, etwa bezogen auf einen radialen Mindestabstand a zwischen dem Bohrungspaar 44, 46 (also dem kürzesten Abstand der aufeinander gerichteten Innenwände dieser Bohrungen) ein Durchmesser der Betätigungsfläche 38 der Stößeleinheit 32 mindestens 0,7 beträgt, in der realisierbaren Praxis bis zu 0,8 und höher liegen kann. Gleichermaßen und als ergänzende bzw. alternative Geometriebetrachtung für diesen erfindungsgemäßen Vorteil beträgt das Verhältnis des Durchmessers (bzw. der radialen Flächenerstreckung) der Fläche 38, bezogen auf den Mittelachsenabschnitt b der Parallelbohrungen 44, 46, mindestens 0,4, in bevorzugten Ausführungsformen liegt dieser Abstand jedoch üblicherweise oberhalb von 0,5, weiter bevorzugt sogar oberhalb von 0,6.

Insbesondere die Fig. 1, 2 und 4 lassen zusätzlich erkennen, dass im Bereich der Befestigungsmittel 44, 46, genauer gesagt zwischen dem Bohrungspaar 44, 46 und sich parallel zu diesen erstreckend, ein zusätzlicher Fluidanschluss 50 ausgebildet ist, welcher, mittels der in Fig. 4 gezeigten, vertikal verlaufenden Aufwärtskanäle 52 und weiterer, in den Figuren nicht gezeigter Verbindungskanäle mit dem Fluideingangsanschluss 26 dauerhaft verbunden ist; dies ermöglicht, dass ein Fluiddruck in den Druckeingangsanschluss 26 eintretenden Fluids auch an dem zusätzlichen Fluidanschluss 50 - beidseits des Gehäuses - anliegt, so dass, insbesondere im Fall einer Verkettung bzw. Aneinander-Montage einer Mehrzahl von Ventilgehäusen 10 mittels fluchtender Befestigungsbohrungen 44, 46, eine kontinuierliche Fluidleitung bzw. Fluidübertragung des Druckfluids über die zusätzlichen Anschlüsse 50 ermöglicht ist. Im Bedarfsfall würden dann zusätzliche, in den Figuren nicht gezeigte Dichtkörper etwa eine derartige durchgeschleifte Verbindung abdichten; im Fall einer isolierten Verwendung eines einzelnen Ventils (bzw. eines einzelnen Ventilkörpers 10) würden dann durch nicht näher im Detail beschriebene Mittel die Anschlüsse 50 druckdicht verschlossen.

Die in den Fig. 1 bis 4 gezeigte erste Ausführungsform der Erfindung verdeutlicht zusätzlich, wie ein zwischen dem Kern 24 und dem Anker 18 begrenzter Arbeitsraum 54 (welcher dann durch den aktivierten, d.h. bei Bestromung der Spule 12 aufwärts bewegten Anker 18 verschlossen würde) entlüftet ist, und zwar in Richtung auf einen bodenseitigen Entlüftungsausgang 56. In fertigungstechnisch und konstruktiv besonders eleganter Weise geschieht diese Entlüftung zum einen durch eine im Kern 24 axial vorgesehene Bohrung 58 als erster Belüftungspfad, welcher mittels einer in einer separat vom Gehäuse 10 vorgesehenen und auf dieses stirnseitig aufsetzbaren Deckelbaugruppe 60 ausgebildeten Quernut 62 in einen wiederum achsparallel verlaufenden, randseitig im Gehäuseinneren des Gehäuses 10 ausgebildeten Kanal 64 als zweitem Belüftungspfad mündet. Dieser zweite Belüftungspfad 64 ist dann zum bodenseitigen (insoweit, bezogen auf das Gehäuse 10, andernends stirnseitig dem Deckel 60 gegenüberliegenden) Entlüftungsauslass 56 geöffnet. Auf diese Weise lässt sich günstig insbesondere das häufig vorliegende Erfordernis realisieren, den Ankerraum bodenseitig, d.h. zu einem unterhalb der Befestigungsmittel 44, 46 liegenden Stirnabschnitt, zu entlüften.

In herstellungstechnisch eleganter Weise lässt sich beispielsweise die Deckelbaugruppe 60 (Kappe) durch Kleben, (Ultraschall-) Schweißen oder dgl. Verbindungsverfahren bevorzugt unlösbar mit dem oberen stirnseitigen Ende des Gehäuses 10 verbinden.

Die Fig. 5 und 6 zeigen - nicht abschließend - weitere geometrischkonstruktive Varianten zur Anordnung des Paares der Fluidanschlüsse 26, 42 relativ zu den Befestigungsmitteln 44, 46 bzw. zum Steckerabschnitt 16. Während im Ausführungsbeispiel der Fig. 5, wiederum um 90° in der radialen Ebene winkelversetzt, das Paar von Anschlüssen 26, 28 gemeinsam mit dem Anschluss 16 entlang einer Richtung parallel zur axialen Richtung fluchtet, ist im wiederum alternativen Ausführungsbeispiel der Fig. 6 der Fluideingangsanschluss 26 in der radialen Ebene um 180° zum Fluidarbeitsanschluss 42 versetzt, wobei zusätzlich ein Versatz in der axialen Richtung vorliegt. Auch diese Anordnung ist wiederum orthogonal zur durch die Befestigungsbohrung 44, 46 der Befestigungsmittel definierten Richtung.

## Patentansprüche

1. Elektromagnetische Ventilvorrichtung mit
als Reaktion auf eine Bestromung von in einem Ventilgehäuse (10) vorgesehenen stationären Spulenmitteln (12) entlang einer axialen Richtung im Ventilgehäuse bewegbar ausgebildeten Ankermitteln (18), die zum Zusammenwirken mit einem einem Fluideingangsanschluss (26) des Ventilgehäuses zugeordneten ersten Ventilsitz (22) ausgebildet sind,
wobei ein erster Fluidströmungspfad (36) im Ventilgehäuse so ausgebildet ist, dass durch den geöffneten ersten Ventilsitz strömendes Fluid zum Betätigen von mit einem bevorzugt axial oder achsparallel zu den Ankermitteln (18) vorgesehenen und relativ zu diesen bewegbaren, mit einer Vorspannkraft beaufschlagten Stößelmitteln (32) fließen kann,
und das Betätigen ein Öffnen eines mit den Stößelmitteln (32) zusammenwirkenden zweiten Ventilsitzes (43) zum Herstellen einer Fluidverbindung zu einem Fluidarbeitsanschluss (42) des Ventilgehäuses bewirkt,
und wobei das Ventilgehäuse Befestigungsmittel (44, 46) in Form mindestens eines sich in einem Winkel, insbesondere quer, zur axialen Richtung erstreckenden Durchbruchs, insbesondere Befestigungsbohrung, aufweist,
und wobei
der Fluideingangsanschluss (26) und der bevorzugt zu diesem benachbart vorgesehene Arbeitsanschluss (42), bezogen auf die Befestigungsmittel, auf derselben axialen Seite des Ventilgehäuses ausgebildet ist
**dadurch gekennzeichnet,**
**dass** den Ankermitteln im Ventilgehäuse stationäre Kernmittel (24), axial dem ersten Ventilsitz gegenüberliegend, vorgesehen sind, die mit den Ankermitteln einen belüfteten Arbeitsraum (54) begrenzen, wobei die Belüftung durch einen an und/oder in den Kernmitteln verlaufenden ersten Belüftungspfad (58), einen zumindest abschnittsweise parallel zur axialen Richtung verlaufenden zweiten Belüftungspfad (64) im Ventilgehäuse, insbesondere in einem Mantelbereich des Ventilgehäuses, sowie durch einen endseitig der Kernmittel und/oder des Ventilgehäuses ausgebildeten, den ersten und den zweiten Belüftungspfad verbindenden Verbindungspfad (62) realisiert ist,
und wobei der Verbindungspfad mittels einer axial endseitig mit dem Ventilgehäuse verbindbaren Kappen- und/oder Deckelbaugruppe (60) realisiert ist.

2. Vorrichtung nach Anspruch 1, **dadurch gekennzeichnet, dass** der als Pneumatikdruckanschluss ausgebildete Fluideingangsanschluss (26) mit einem Pneumatikfluid so beaufschlagbar ist, dass ein Fluiddruck des Pneumatikfluids bei geöffnetem ersten Ventilsitz (22) eine mechanische, insbesondere federbeaufschlagte (40), auf die Stößelmittel (32) wirkende Rückstellkraft überwinden kann.

3. Vorrichtung nach Anspruch 1 oder 2, **dadurch gekennzeichnet, dass** der jeweils flanschartig ausgebildete und bevorzugt einstückig an dem zumindest abschnittsweise zylindrisch ausgebildeten Gehäuse ansitzende Fluideingangs- und Fluidarbeitsanschluss entlang der axialen Richtung und/oder radial zueinander versetzt angeordnet ist.

4. Vorrichtung nach Anspruch 3, **dadurch gekennzeichnet, dass** der Fluideingangs- und Fluidarbeitsanschluss auf einander, bezogen auf eine der axialen Richtung entsprechende Ventilgehäuse-Längsachse, gegenüberliegenden Seiten des Ventilgehäuses ausgebildet ist.

5. Vorrichtung nach Anspruch 3, **dadurch gekennzeichnet, dass** der Fluideingangs- und Fluidausgangsanschluss einander benachbart entweder ohne radialen Versatz oder mit radialem sowie mit axialem Versatz am Ventilgehäuse ausgebildet ist.

6. Vorrichtung nach einem der Ansprüche 3 bis 5, **dadurch gekennzeichnet, dass** eine radiale Richtung des Fluideingangs- und/oder Fluidarbeitsanschlusses, bezogen auf eine radiale Richtung des die Befestigungsmittel realisierenden Durchbruchs, einen Winkelversatz entweder von null oder einen Winkelversatz im Bereich zwischen 70° und 110°, insbesondere von 90°, aufweist.

7. Vorrichtung nach einem der Ansprüche 1 bis 6, **dadurch gekennzeichnet, dass** das Ventilgehäuse insbesondere in einem den Befestigungsmitteln axial gegenüberliegenden Endabschnitt einen zur Stromversorgung der Spulenmittel beschaltbaren Steckerabschnitt (16) aufweist, der bevorzugt eine sich parallel zum Fluideingangs- und/oder Fluidausgangsanschluss erstreckende und/oder rechtwinklig zur Erstreckungsrichtung des Durchbruchs (44, 46) erstreckende Ausrichtung aufweist.

8. Vorrichtung nach einem der Ansprüche 1 bis 7, **dadurch gekennzeichnet, dass** den bevorzugt ein Paar einander benachbart ausgebildeter und weiter bevorzugt zueinander parallel ausgerichteter Durchbrüche (44, 46) aufweisenden Befestigungsmitteln ein zusätzlicher Fluidanschluss (50) der Ventilvorrichtung zugeordnet ist, der permanent mit dem Fluideingangsanschluss verbunden ist.

9. Vorrichtung nach Anspruch 8, **dadurch gekennzeichnet, dass** der zusätzliche Fluidanschluss (50) so relativ zu den Befestigungsmitteln ausgebildet und ausgerichtet ist, insbesondere parallel zu diesen verläuft, dass bei einer mittels der Befestigungsmittel miteinander verbundenen Mehrzahl der Ventilgehäuse einer Mehrzahl von miteinander verbundenen Ventilvorrichtungen die jeweiligen zusätzlichen Fluidanschlüsse, insbesondere durch einen Einsatz von Kupplungsmitteln, druckdicht miteinander verbindbar sind.

10. Vorrichtung nach einem der Ansprüche 1 bis 9, **dadurch gekennzeichnet, dass** der Durchmesser und/oder die maximale Querschnittsbreite einer ankerseitigen Betätigungsfläche (38) der Stößelmittel (32), bezogen auf einen Mittelachsenabstand (b) eines Paares von die Befestigungsmittel realisierenden parallelen Durchbrüchen (44, 46) mindestens 0,4, bevorzugt mindestens 0,5, weiter bevorzugt mindestens 0,6 beträgt
und/oder der Durchmesser und/oder die maximale Querschnittsbreite der ankerseitigen Betätigungsfläche (38) der Stößelmittel (32), bezogen auf einen radialen Mindestabstand (a) des Paares von die Befestigungsmittel realisierenden parallelen Durchbrüchen (44, 46) mindestens 0,7, bevorzugt mindestens 0,8, beträgt.

11. Elektromagnetische Ventilvorrichtung nach einem der Ansprüche 1 bis 10, **dadurch gekennzeichnet, dass** das Ventilgehäuse mehrteilig ausgebildet ist und der Fluideingangsanschluss, der Arbeitsanschluss sowie die Befestigungsmittel an bzw. in einem gemeinsamen, bevorzugt einstückigen Gehäuseteil des Ventilgehäuses vorgesehen sind.

12. Verwendung der elektromagnetischen Ventilvorrichtung nach einem der Ansprüche 1 bis 11 als 3/2-Pneumatikventil für die Fluidsteuerung oder Fluidschaltung in Kraftfahrzeugen, insbesondere Nutzfahrzeugen.

13. Ventilsystem aufweisend eine Mehrzahl der elektromagnetischen Ventilvorrichtungen nach einem der Ansprüche 1 bis 11, die mittels der jeweiligen Durchbrüche der jeweiligen Befestigungsmittel entlang einer durchgehenden Richtung der Durchbrüche miteinander verbunden sind.

## Claims

1. An electromagnetic valve device comprising
armature means (18) which are formed so as to be moveable along an axial direction in a valve housing (10) in response to an energization of stationary coil means (12) provided in the valve housing and which are formed to interact with a first valve seat (22) assigned to a fluid inlet connection (26) of the valve housing,
a first fluid flow path (36) being formed in the valve housing in such a manner that fluid flowing through the opened first valve seat can flow in order to actuate plunger means (32) which are provided preferably axially or axially parallel to the armature means (18) and are moveable relative to said armature means and to which a preloading force is applied,
and the actuation causing a second valve seat (43) interacting with the plunger means (32) to be opened so as to produce a fluid connection to a fluid working connection (42) of the valve housing,
and the valve housing having fastening means (44, 46) in the form of at least one hole extending at an angle, in particular transversely, to the axial direction, in particular a fastening bore,
and
the fluid inlet connection (26) and the working connection (42), provided preferably adjacent thereto are formed on the same axial side of the valve housing in relation to the fastening means,
**characterized in that**
the armature means in the valve housing are assigned stationary core means (24) axially opposite the first valve seat which, together with the armature means, delimit a ventilated working space (54),
the ventilation being realized by a first ventilation path (58) running on and/or in the core means, a second ventilation path (64) running at least partially parallel to the axial direction in the valve housing, in particular in wall region of the valve housing, and by a connecting path (62) formed at the end of the core means and/or of the valve housing and connecting the first and the second ventilation path,
and the connecting path being implemented by means of a cap assembly and/or cover assembly (60) which can be connected to an axial end of the valve housing.

2. The device according to claim 1, **characterized in that** a pneumatic fluid can be applied to the fluid inlet connection (26), which is in the form of a pneumatic pressure connection, in such a manner that when the first valve seat (22) is opened, a fluid pressure of the pneumatic fluid can overcome a mechanical, in particular spring-loaded (40) restoring force acting on the plunger means (32).

3. The device according to claim 1 or 2, **characterized in that** the fluid inlet connection and the fluid working connection, which are each formed in a flange-like manner and preferably sit integrally on the at least partially cylindrical housing, are offset along the axial direction and/or radially to one another.

4. The device according to claim 3, **characterized in that** the fluid inlet connection and the fluid working connection are formed on mutually opposite sides of the valve housing in relation to a longitudinal axis of the valve housing corresponding to the axial direction.

5. The device according to claim 3, **characterized in that** the fluid inlet connection and the fluid outlet connection are formed so as to be adjacent to one another at the valve housing either without a radial offset or with a radial offset and with an axial offset.

6. The device according to any one of claims 3 to 5, **characterized in that** a radial direction of the fluid inlet connection and/or of the fluid working connection, in relation to a radial direction of the hole realizing the fastening means, has an angle offset of zero or an angle offset in the range between 70° and 110°, in particular of 90°.

7. The device according to any one of claims 1 to 6, **characterized in that** the valve housing has a connector section (16), in particular in an end section axially opposite the fastening means, which can be connected to the power supply of the coil means and which preferably has an orientation which extends parallel to the fluid inlet connection and/or to the fluid outlet connection and/or at right angles to the extension direction of the hole (44, 46).

8. The device according to any one of claims 1 to 7, **characterized in that** the fastening means, which preferably have a pair of holes (44, 46) formed so as to be adjacent to one another and more preferably oriented parallel to one another, are assigned an additional fluid connection (50) of the valve device which is permanently connected to the fluid inlet connection.

9. The device according to claim 8, **characterized in that** the additional fluid connection (50) is formed and oriented relative to the fastening means, in particular parallel to said fastening means, in such a manner that if there is a plurality of valve housings of a plurality of valve devices connected to one another, the valve housings being connected to one another by means of the fastening means, the respective additional fluid connections can be connected to one another in a pressure-tight manner, in particular by using coupling means.

10. The device according to any one of claims 1 to 9, **characterized in that** the diameter and/or the maximum cross-sectional width of an actuation face (38) of the plunger means (32) on the armature side, in relation to a center axis distance (b) of a pair of parallel holes (44, 46) realizing the fastening means, is at least 0.4, preferably at least 0.5, more preferably at least 0.6
and/or the diameter and/or the maximum cross-sectional width of the actuation face (38) of the plunger means (32) on the armature side, in relation to a minimum radial distance (a) of the pair of parallel holes (44, 46) realizing the fastening means, is at least 0.7, preferably at least 0.8.

11. The electromagnetic valve device according to any one of claims 1 to 10, **characterized in that** the valve housing is formed in multiple parts and the fluid inlet connection, the working connection and the fastening means are provided at or in a shared, preferably single-piece housing part of the valve housing.

12. A use of the electromagnetic valve device according to any one of claims 1 to 11 as a 3/2-way pneumatic valve for the fluid control or fluid switching in motor vehicles, in particular utility vehicles.

13. A valve system having a plurality of the electromagnetic valve devices according to any one of claims 1 to 11 being connected to one another by means of the respective holes of the respective fastening means along a continuous direction of the holes.

## Revendications

1. Dispositif de soupape électromagnétique ayant
des moyens d'ancrage (18) étant mobiles le long d'une direction axiale dans un boîtier de soupape (10) en réaction à une alimentation en courant des moyens de bobinage (12) stationnaires prévus dans le boîtier de soupape, lesdits moyens d'ancrage étant configurés pour interagir avec un premier siège de soupape (22) assigné à un raccordement d'entrée fluidique (26) du boîtier de soupape,
une première voie d'écoulement de fluide (36) dans le boîtier de soupape étant configurée de telle manière qu'un fluide s'écoulant au travers du premier siège de soupape ouvert peut s'écouler pour actionner des moyens de poussoir (32) qui sont prévus, de préférence, de manière axiale ou parallèle à l'axe des moyens d'ancrage (18) et qui sont mobiles par rapport auxdits moyens d'ancrage et auxquels une force de précontrainte est appliquée, et l'actionnement provoquant une ouverture d'un deuxième siège de soupape (43) interagissant avec les moyens de poussoir (32) afin de produire une communication fluidique avec un raccordement de travail fluidique (42) du boîtier de soupape,
et le boîtier de soupape ayant des moyens de fixation (44, 46), notamment un perçage de fixation, en forme d'au moins un orifice s'étendant suivant un angle, notamment transversalement, à la direction axiale, et
le raccordement d'entrée fluidique (26) et le raccordement de travail (42), de préférence prévu adjacent audit raccordement d'entrée fluidique, sont réalisés sur le même côté axial du boîtier de soupape, par rapport aux moyens de fixation,
**caractérisé en ce que**
des moyens de noyau (24) stationnaires opposés axialement au premier siège de soupape qui limitent un espace de travail (54) aéré conjointement avec les moyens d'ancrage sont assignés aux moyens d'ancrage dans le boîtier de soupape,
l'aération étant réalisée par une première voie d'aération (58) s'étendant sur et/ou dans les moyens de noyau, une deuxième voie d'aération (64) étant au moins partiellement parallèle à la direction axiale dans le boîtier de soupape, notamment dans une zone périphérique du boîtier de soupape, et par une voie de connexion (62) connectant la première et la deuxième voie d'aération et étant réalisée sur le côté d'extrémité des moyens de noyau et/ou du boîtier de soupape,
et la voie de connexion étant réalisée au moyen d'un ensemble (60) de capot et/ou de couvercle qui peut être connecté au boîtier de soupape sur le côté d'extrémité axial.

2. Dispositif selon la revendication 1, **caractérisé en ce que** le raccordement d'entrée fluidique (26), qui est réalisé comme un raccordement de pression pneumatique, est alimenté en fluide pneumatique de telle manière que quand le premier siège de soupape (22) est ouvert, une pression fluidique du fluide pneumatique peut surmonter une force de rappel mécanique qui est notamment soumise à l'action d'un ressort (40) et qui agit sur les moyens de poussoir (32).

3. Dispositif selon la revendication 1 ou la revendication 2, **caractérisé en ce que** le raccordement d'entrée fluidique et le raccordement de travail fluidique, qui sont en forme de bride et qui forment, de préférence, une seule pièce avec le boîtier au moins partiellement cylindrique, sont décalés le long de la direction axiale et/ou radialement l'un par rapport à l'autre.

4. Dispositif selon la revendication 3, **caractérisé en ce que** le raccordement d'entrée fluidique et le raccordement de travail fluidique sont réalisés sur des côtés opposés du boîtier de soupape par rapport à un axe longitudinal du boîtier de soupape qui correspond à la direction axiale.

5. Dispositif selon la revendication 3, **caractérisé en ce que** le raccordement d'entrée fluidique et le raccordement de sortie fluidique sont réalisés adjacentes l'un à l'autre sans décalage radial ou avec un décalage radial et avec un décalage axial sur le boîtier de soupape.

6. Dispositif selon l'une quelconque des revendications 3 à 5, **caractérisé en ce qu'**une direction radiale du raccordement d'entrée fluidique et/ou du raccordement de travail fluidique a un décalage angulaire de zéro ou un décalage entre 70° et 110°, notamment de 90°, par rapport à une direction radiale de l'orifice qui réalise les moyens de fixation.

7. Dispositif selon l'une quelconque des revendications 1 à 6, **caractérisé en ce que** le boîtier de soupape a une partie de fiche (16), notamment dans une partie d'extrémité opposée axialement aux moyens de fixation, qui peut être commutée pour alimenter les moyens de bobinage en courant, la partie de fiche ayant une orientation qui s'étend, de préférence, parallèlement au raccordement d'entrée fluidique et/ou au raccordement de sortie de fluidique et/ou qui s'étend perpendiculairement à la direction d'extension de l'orifice (44, 46).

8. Dispositif selon l'une quelconque des revendications 1 à 7, **caractérisé en ce qu'**un raccordement fluidique (50) additionnel du boîtier de soupape, qui est connecté de manière permanente au raccordement d'entrée fluidique, est assigné aux moyens de fixation, qui ont, de préférence, une paire d'orifices (44, 46) adjacentes l'un à l'autre et, plus préférentiellement, parallèles l'un à l'autre.

9. Dispositif selon la revendication 8, **caractérisé en ce que** le raccordement fluidique (50) additionnel est configuré et orienté par rapport aux moyens de fixation, notamment s'étend parallèlement aux moyens de fixation, de telle manière que quand il y a une pluralité de boîtiers de soupape d'une pluralité de dispositifs de soupape connectés les uns aux autres, les boîtier de soupape étant connectés au moyen des moyens de fixations, les raccordements fluidiques additionnels respectifs peuvent être connectés de manière étanche à la pression, notamment en utilisant des moyens de couplage.

10. Dispositif selon l'une quelconque des revendications 1 à 9, **caractérisé en ce que** le diamètre et/ou la largeur de section maximale d'une surface d'actionnement (38) sur le côté d'ancrage des moyens de poussoir (32) est au moins 0,4, de préférence au moins 0,5, plus préférentiellement au moins 0,6, par rapport à une distance entre les axes centraux (b) d'une paire d'orifices (44, 46) parallèles qui réalisent les moyens de fixation et/ou que le diamètre et/ou la largeur de section maximale de la surface d'actionnement (38) sur le côté d'ancrage des moyens de poussoir (32) est au moins 0,7, de préférence au moins 0,8, par rapport à une distance radiale minimale (a) de la paire d'orifices (44, 46) parallèles qui réalisent les moyens de fixation.

11. Dispositif de soupape électromagnétique selon l'une quelconque des revendications 1 à 10, **caractérisé en ce que** le boîtier de soupape est réalisé en plusieurs pièces et que le raccordement d'entrée fluidique, le raccordement de travail et les moyens de fixation sont prévus sur ou dans une partie de boitier commune du boîtier de soupape qui est réalisée, de préférence, en une pièce.

12. Usage du dispositif de soupape électromagnétique selon l'une quelconque des revendications 1 à 11 comme une 3/2 soupape pneumatique pour le contrôle fluidique ou le circuit fluidique dans des véhicules, notamment des véhicules utilitaires.

13. Système de soupape comprenant une pluralité de dispositifs de soupape électromagnétiques selon l'une quelconque des revendications 1 à 11 qui sont connectés les uns aux autres au moyen des orifices respectifs des moyens de fixation respectifs le long d'une direction continue des orifices.
